# EUROPEAN PATENT APPLICATION

(11) **EP 1 382 830 A2**
(43) Date of publication of application: **21.01.2004**
(21) Application number: 03014586.6
(22) Date of filing: 08.07.2003
(51) Int. Cl.: F02M 21/02

(54) **Compressed gas pressure regulator designed for engine fuelling**

(30) Priority: 15.07.2002 IT PC20020015; 16.12.2002 IT PC20020037
(71) Applicant: POLIAUTO di P. Parietti & C. S.n.c., 29100 Piacenza PC (IT)
(72) Inventor: Parietti, Pietro, 29100 Piacenza PC (IT)
(74) Representative: La Ciura, Salvatore

(57) **Abstract**

A compressed gas pressure regulator is described, designed for fuelling engines with the gas injection system, which includes an inlet connected to a vaporiser and one or more outlets connected to the engine fuelling system.

In particular, the pressure regulator includes:
- a pressurised gas inlet chamber (5)
- a chamber (12) that communicates with said inlet chamber being filled with a thin metal wool (40) designed to trap impurities
- a reduction chamber (20)
- a pipe (13) that connects said chamber (12) with said reduction chamber (20)
- a lever-operated device (30) that closes said pipe (13), on which a membrane acts, said membrane being subject to the low pressure present in said chamber (20) on one side and to a reference pressure and a calibration spring (32) on the other
- a cut-off solenoid valve (18) which activates a piston (16) designed to close the communication between said inlet chamber (5) and said pipe (13), the axis of which said piston substantially coincides with the axis of said pipe (13).

## Description

This invention relates to a pressure regulator suitable to be fuelled with a pressurised gas (not in the liquid state, but already in the gaseous phase): typically liquefied petroleum gas (LPG), or possibly natural gas. The regulator is designed to reduce the inlet pressure and to supply gas to the engine at a pre-determined pressure value.

The gas which is output by this device, at a low, regulated pressure, is destined to fuel one or more electrical injectors designed to meter the quantity of gas that fuels the engine or, alternatively, can supply one or more successive reduction stages, to fuel the engine by the aspirated system.

The regulator is not equipped with a heat exchanger, and can therefore be manufactured in a particularly small size; it can also be entirely made of brass rather than aluminium, as is usual for the traditional type of reducer-vaporisers. These characteristics make the device particularly suitable for use in engine compartments where space is at a premium, and especially for fuelling boat engines, as brass is a much more rustproof material than aluminium when exposed to saline fog.

In this regulator, which also contains an inlet solenoid valve with built-in filter, the two seal seatings, namely the inlet solenoid valve seating and the pressure regulator stage seating, are located at either end of a single very short channel.

The regulator can also be equipped with a number of output connectors, and can therefore fuel multi-cylinder engines through a common rail inside the regulator.

The special manufacturing characteristics of the regulation stage of this reducer make the device particularly small and compact. The stage is constituted by a conical spring which becomes practically flat in operation, and a lever with a 1:1 ratio which enables very large amounts of pure gas to be output with a small movement of the membrane normally present in this type of device; said membrane can consequently be made in a small size.

According to a preferred embodiment of the invention, means are provided that enable the value of the regulator calibration pressure to be varied suitably on the basis of the gas temperature, so that the energy associated with the gaseous fuel that passes through the electrical injector in the time unit [kJ/s] remains wholly independent of the temperature of the gas delivered.

The invention will now be described in detail by reference to the annexed figures, in which:
- fig. 1 illustrates a regulator according to the invention in cross-section;
- fig. 2 illustrates afurther preferred embodiment of a illustrates a regulator according to the invention.

The reducer according to the invention comprises a body constituted by two parts, 1 and 1a, joined together, with an inlet tank 2, and a control assembly indicated as 3 on the opposite side.

Tank 2 is fitted with a connector 4 for connection to the gas delivery pipe, which leads from a separate vaporiser (not illustrated) located upstream.

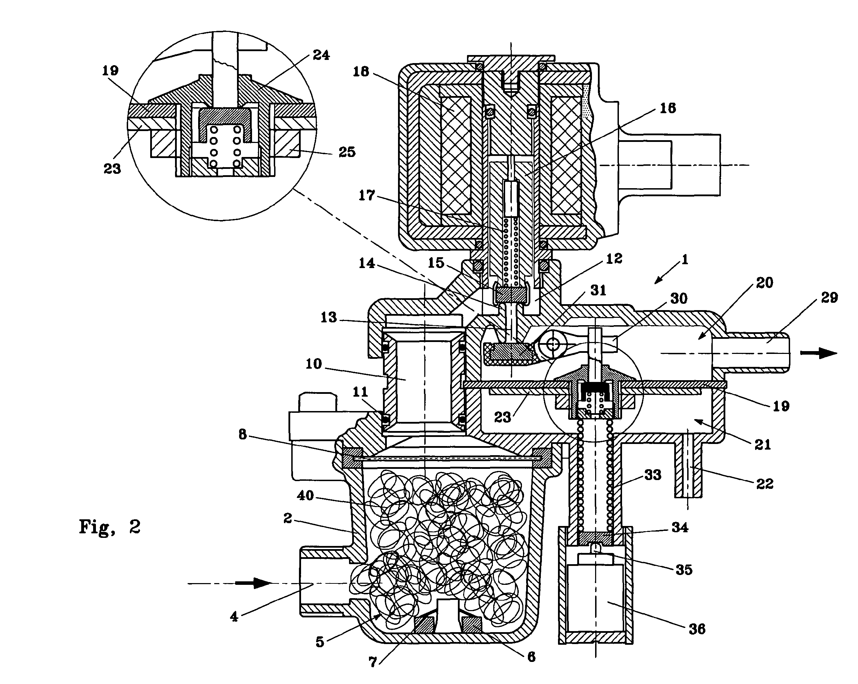

According to a preferred embodiment of the invention shown in fig. 2, the tank is 2 filled with a thin metal wool 40 designed to trap impurities (drops of oil and the like) present in the gas, which tend to be deposited when the flow rate of the gas is reduced following an increase in pipe diameter.

Body 1, as will be described in detail below, is fitted with one or more outlet pipes leading to the engine fuelling system.

The fact that the inlet is connected to a separate vaporiser offers considerable advantages. Normally, in this device the pressure reducer is located upstream of the vaporiser, because it is considered more advantageous to atomise the gas after expansion. In the case of the reducer according to the invention, however, the opposite occurs, because atomisation takes place upstream of the reducer, with the result that the atomised gas is maintained at high pressure before entering the reducer.

This provides considerable advantages, firstly because the reducer can be manufactured with no need for connection to the pipes that convey hot water from the engine, thus greatly facilitating dismantling operations when maintenance is performed, and secondly because when the engine is switched off and the solenoid valve, which is normally located upstream of the reducer, consequently closes, the high pressure of the atomised gas, which is no longer aspirated by the reducer, pushes back the gas which is still in the liquid state, overcoming the force of the spring that holds closed the piston of the safety solenoid valve fitted to the tank, and forcing the liquid gas back into the tank. Consequently, no more liquid gas remains in the pipe leading from the tank, as it does in conventional units, but only a small amount of already atomised gas, so that if the unit needs to be dismantled, only a small amount of atomised gas leaks out when the connector of the feed pipe leading to the reducer is detached, as opposed to the far higher amount of gas in the liquid state (which vaporises), as in the case of known units.

Tank 2 forms a decanting chamber 5 with a magnetic element 6 on the base; said magnetic element, secured by an elastic washer 7, is designed to trap any ferrous impurities which may enter the reducer. A filter element 8 is retained in position by a gasket 9, clamped between body 1a and tank 2; in addition to supporting the filter element, said gasket also forms the seal between the tank and the body. A connector pipe 10, which forms a seal against bodies 1 and 1a by means of gaskets 11, places chamber 5 in communication with a ring-shaped chamber 12.

The latter communicates with the interior of body 1 through a channel 13 bounded by a ring-shaped wall 14.

On one side wall 14 penetrates into chamber 12, where it is hermetically closed by a pad 15, made of rubber or a similar material, attached to the end of a piston 16 which a spring 17 tends to push downwards, pressing pad 15 so that it closes channel 13.

Piston 16 is subject to the action of a solenoid 18 which causes it to move upwards, overcoming the force of spring 17, the weight of the piston and the force of any inlet pressure which may be manifested due to the difference in pressure between the areas upstream and downstream of the piston.

On the opposite side, channel 13 leads to the interior of body 1.

A membrane 19, which separates a pressure reduction chamber 20 from a reference chamber 21, is inserted between bodies 1 and 1a; said reference chamber communicates with the intake manifold of the engine by means of a rubber hose attached to a connector 22.

Membrane 19 is associated with a washer 23 clamped against the membrane by means of a tie rod 24 with a nut 25.

A conical spring 32 acts on washer 23 and membrane 19, pushing lever 30 to rotate in the direction of opening of pipe 13, in contrast with the pressure in chamber 20.

Tie rod 24 houses a safety valve which places pressure reduction chamber 20 in communication with reference chamber 21.

The safety valve consists of a sphere 26 which rests on an O-ring 27, and is pushed by a calibration spring 28 to form a seal.

Chamber 20, from which each of a set of pipes 29 leads to one cylinder of the engine, contains a lever 30 with rubber pad 31, which rests against the lower edge of wall 14, hermetically closing channel 13.

Lever 30 is short, with two arms of substantially equal length. The movements of lever 30 are controlled by the movements of membrane 19.

In accordance with the embodimet of fig. 2, a gas temperature compensation device is provided, that acts on membrane 19.

A membrane calibration spring 33 rests on membrane 19 on one side; on the opposite side, instead of resting on a fixed wall, as in the case of the conventional type of regulator, it rests on a mobile wall 34 which moves under the control of a tip 35 which is part of a wax thermoregulator 36 fitted inside said pressure regulator.

The position assumed by said tip 35 depends on the temperature of thermoregulator 36.

The thermal characteristics of said thermoregulator 36 are suitably combined by the designer with the characteristics of spring 33 and the other components of the regulation stage so that the stage follows a law of pressure variation according to temperature such that for a given operating condition of the engine, even if the temperature changes, the energy per unit of volume [kJ/m3] contained in the gaseous fuel always remains constant, thus allowing the same amount of energy always to pass through the electrical injector which meters the volume [m3/s] in the unit of time [kJ/s].

The device operates as follows.

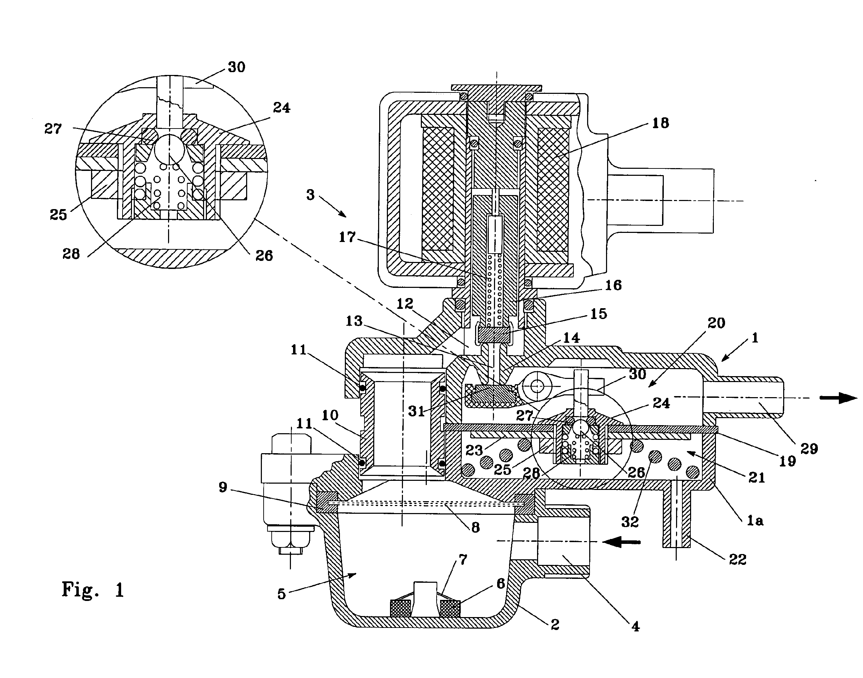

The gas, already in the gaseous state, enters decanting chamber 5 in tank 2, which is positioned in the lowest part of the device, through inlet pipe 4 (fig. 1).

The gas thus passes through filter 8 and pipe 10 to inlet chamber 12 of the solenoid valve.

When coil 18 is powered, piston 16 rises due to the effect of electromagnetic force, and opens the passage to channel 13. The gas can then reach the seating of the pressure reduction stage, in chamber 20, through channel 13.

The calibration pressure depends on the force of spring 32 used.

The gas, whose pressure has thus been reduced, can then flow from pressure reduction chamber 20 through pipes 29 to the injectors connected to the intake manifold, or to the successive stages. Each injector is connected upstream of the suction valve of each cylinder. Any overpressure which occurs in reduction chamber 20 is discharged through the safety valve in reference chamber 21.

In the embodiment of fig. 2, the calibration pressure depends on the force exerted by spring 33, which acts on the control membrane of pad 31 that opens and closes the passage of the gas. The gas, whose pressure has thus been reduced, can then flow from pressure reduction chamber 20 through pipes 29 to the injectors connected to the intake manifold, or to the successive stages.

Variations in density of the gas due to variations in temperature will be compensated by thermoregulator 36, which dilates when the gas temperature increases and pushes tip 35 so that it acts on washer 34 and compresses spring 33.

Spring 33 will then act with greater force on membrane 19, pushing arm 30 to cause a larger amount of gas to flow into chamber 20.

In this way, variations in the density of the gas which take place on variation of the temperature during use will automatically be compensated.

Due to the particular configuration of its various parts, the reducer according to the invention can be manufactured in a very compact size. In particular, the fact that channel 13 is very short, substantially with a ratio of between 0.5 and 2.5 between length and diameter, and the fact that lever 30 has arms of substantially equal length allows the engine to operate at maximum power (maximum flow of gas delivered) even with small movements of the reduction stage membrane, thus allowing the use of a membrane with a small diameter, and therefore the manufacture of a very compact device.

In the same way, the fact that a conical spring is used to control the movements of the membrane enables the size of the assembly to be reduced even further.

An expert in the field could devise various modifications and variations, all of which should be deemed to fall within the ambit of this invention.

## Claims

1. Compressed gas pressure regulator designed for fuelling engines with the gas injection system, **characterised in that** it includes an inlet connected to a vaporiser and one or more outlets connected directly to the engine injectors.

2. Compressed gas pressure regulator designed for fuelling engines with the gas injection system as claimed in claim 1, of the type comprising a pressurised gas inlet chamber (5) communicating with a reduction chamber (20) via a pipe (13), the opening of which is controlled by a lever-operated device (30) on which a membrane acts, said membrane being subject to the reduced pressure present in said chamber (20) on one side and to a reference pressure and a calibration spring (32) on the other, **characterised in that** said pipe (13) is rectilinear, has a constant diamenter and the ratio between the length and diameter of said pipe (13) is between 1 and 2.5.

3. Pressure regulator as claimed in claim 2, **characterised in that** the ratio between the lengths of the arms of said lever (30) is between 0.8 and 1.3, and preferably approximately 1:1.

4. Pressure regulator as claimed in claim 3, **characterised in that** a cut-off solenoid valve activates a piston designed to close the communication between said inlet chamber and said pipe (13), the axis of which said piston substantially coincides with the axis of said pipe (13).

5. Pressure regulator as claimed in claim 4, **characterised in that** the body is made entirely of brass.

6. Pressure regulator as claimed in any of claims 2 to 5, **characterised in that** an overpressure valve constituted by a sphere, spring, O-ring and adjustable cap is incorporated in the tie rod that connects membrane (19) to lever (30) of the pressure reduction stage.

7. Compressed gas pressure regulator designed for fuelling engines with the gas injection system, **characterised in that** it includes:
• a pressurised gas inlet chamber (5)
• a chamber (12) that communicates with said inlet chamber
• a reduction chamber (20)
• a pipe (13) that connects said chamber (12) with said reduction chamber (20)
• a lever-operated device (30) that closes said pipe (13), on which a membrane acts, said membrane being subject to the low pressure present in said chamber (20) on one side and to a reference pressure and a calibration spring (32) on the other
• a cut-off solenoid valve (18) which activates a piston (16) designed to close the communication between said inlet chamber (5) and said pipe (13), the axis of which said piston substantially coincides with the axis of said pipe (13).

8. Pressure regulator as claimed in claim 7, **characterised in that** the ratio between the length and the diameter of said pipe (13) is between 1 and 2.5, and the ratio between the lengths of the arms of said lever (30) is between 0.8 and 1.3, and preferably approximately 1:1.

9. Compressed gas pressure regulator according to claim 1, **characterised in that** it includes calibration means (33, 36) designed to act on a membrane (19) which controls a lever (30) that opens and closes the passage of gas (13) on the basis of the temperature of said gas, so as to maintain constant at the regulator outlet (29) the heat value per unit of volume of the gaseous fuel delivered.

10. Pressure regulator as claimed in claim 9, **characterised in that** said calibration means are constituted by a heat-actuated regulator (36) which acts on a spring (33) that calibrates the regulated pressure.

11. Compressed gas pressure regulator designed for fuelling engines with the gas injection system as claimed in claim 10, **characterised in that** said thermoregulator (36) is a wax thermoregulator.

12. Compressed gas pressure regulator designed for fuelling engines as claimed in claim 11, wherein said wax thermoregulator (36) acts on a spring (33) that calibrates the regulated pressure.

13. Compressed gas pressure regulator designed for fuelling engines with the gas injection system, **characterised in that** it includes:
• a pressurised gas inlet chamber (5), said inlet chamber
• a chamber (12) that communicates with said inlet chamber
• a reduction chamber (20)
• a pipe (13) that connects said chamber (12) with said reduction chamber (20)
• a lever-operated device (30) that closes said pipe (13), on which a membrane acts, said membrane being subject to the low pressure present in said chamber (20) on one side and to a reference pressure and a calibration spring (32) on the other
• a cut-off solenoid valve (18) which activates a piston (16) designed to close the communication between said inlet chamber (5) and said pipe (13), the axis of which said piston substantially coincides with the axis of said pipe (13)
• a heat-actuated regulator (36) which acts on a spring (33) that calibrates the regulated pressure.

14. Compressed gas pressure regulator designed for fuelling engines with the gas injection system according to claim 13, **characterised in that** said pipe (13) is rectilinear, has a constant diamenter and the ratio between the length and diameter of said pipe (13) is between 1 and 2.5 and furteher **characterised in that** the ratio between the lengths of the arms of said lever (30) is between 0.8 and 1.3, and preferably approximately 1:1.
